(19) Europäisches Patentamt
European Patent Office
Office européen des brevets

(11) **EP 2 976 569 B1**

(12) **FASCICULE DE BREVET EUROPEEN**

(45) Date de publication et mention de la délivrance du brevet:
**17.02.2021 Bulletin 2021/07**

(21) Numéro de dépôt: **14711274.2**

(22) Date de dépôt: **20.03.2014**

(51) Int Cl.:
*F21S 41/26* (2018.01)   *F21S 41/25* (2018.01)
*F21S 43/14* (2018.01)   *F21S 43/31* (2018.01)
*F21V 5/04* (2006.01)   *F21V 7/04* (2006.01)

(86) Numéro de dépôt international:
**PCT/EP2014/055638**

(87) Numéro de publication internationale:
**WO 2014/147195 (25.09.2014 Gazette 2014/39)**

(54) **MODULE D'ÉCLAIRAGE ET/OU DE SIGNALISATION POUR VÉHICULE AUTOMOBILE**

BELEUCHTUNGS- UND/ODER MELDEMODUL FÜR EIN KRAFTFAHRZEUG

ILLUMINATING AND/OR SIGNALLING MODULE FOR AN AUTOMOTIVE VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2013 FR 1352512**

(43) Date de publication de la demande:
**27.01.2016 Bulletin 2016/04**

(73) Titulaire: **Valeo Vision**
**93012 Bobigny Cedex (FR)**

(72) Inventeurs:
• **ALBOU, Pierre**
**F-75013 Paris (FR)**
• **HERMITTE, Michel**
**F-49400 Angers (FR)**

(56) Documents cités:
**EP-A1- 1 610 057      EP-A1- 2 565 522**
**WO-A2-2009/130655**

**Description**

L'invention a trait à un module d'éclairage et/ou de signalisation pour véhicule automobile. L'invention a trait également à un projecteur de véhicule automobile comprenant ledit module. L'invention a trait également à un procédé de réalisation du module.

La présence d'une fonction de signalisation diurne ou encore DRL (acronyme de Daytime Running Light) est maintenant courante dans les projecteurs de véhicule automobile, notamment du fait de son caractère obligatoire dans un grand nombre de pays. Cette fonction DRL requiert un éclairage diffus à l'avant du véhicule qui assure une meilleure visibilité de celui-ci en condition diurne. Cette fonction DRL est réglementée, par exemple pour les pays européens par le règlement n°87 de la commission économique pour l'Europe des Nations Unies (UNECE) intitulé « UNIFORM PROVISIONS CONCERNING THE APPROVAL OF DAYTIME RUNNING LAMPS FOR POWER-DRIVEN VEHICLES ». Un exemple de distribution de faisceau lumineux conforme à ce règlement est donné aux figures 11 et 12 du document de brevet EP244284 au nom du demandeur.

L'intégration de cette fonction dans un projecteur n'est cependant pas sans poser certaines difficultés, notamment au niveau du coût de fabrication et du style du projecteur.

Le document de brevet EP 2 143 994 A1 divulgue un projecteur comprenant un ou plusieurs modules d'éclairage à coupure horizontale assurant une fonction d'éclairage du type éclairage de croisement ou « code », et un module d'éclairage du type « route ». Le module « route » comprend une source lumineuse éclairant dans un demi-espace et un réflecteur du type parabolique. Le module est caractérisé en ce qu'il comprend un capot transparent mobile entre une position inactive et une position active où il est traversé par les rayons de la source lumineuse dirigés vers la surface réfléchissante du réflecteur. Le capot transparent comprend une lentille de diffusion. Lors de l'activation de la fonction de signalisation diurne DRL, la puissance électrique alimentant la source lumineuse est réduite et, parallèlement, le capot est disposé dans sa position active. Cette solution est intéressante d'un point de vue simplicité de mise en œuvre. Elle est cependant essentiellement limitée à un module d'éclairage à surface réfléchissante géométrique et à lentille circulaire. La fonction du capot consistant à diffuser la lumière provenant de la source lumineuse n'est en effet pas facilement applicable à un module à surface réfléchissante complexe. De plus, le montage mobile du capot et sa motorisation peuvent constituer des causes de panne.

Le document de brevet EP 2 187 115 A2 divulgue un module d'éclairage et signalisation bi-fonction, avec une première fonction d'éclairage du type croisement ou « code » comprenant, classiquement, une première source lumineuse, un réflecteur de type elliptique et une lentille circulaire du type plan-convexe et des moyens de coupure du faisceau. La deuxième fonction est une fonction du type signalisation diurne DRL. Elle comprend une deuxième source lumineuse et éventuellement une deuxième surface réfléchissante, disposées sous les éléments correspondants de la première fonction. Elle utilise une extension de la lentille de la fonction d'éclairage de croisement, ladite extension comprenant des surfaces lenticulaires destinées à assurer un faisceau lumineux adéquat. La lentille du module présente ainsi une forme bien particulière qui limite la solution proposée par cet enseignement à un style de projecteur bien spécifique.

Le document de brevet FR 2 960 497 A1 décrit un module d'éclairage bi-fonction pour projecteur de véhicule automobile, comprenant essentiellement une source lumineuse, une surface réfléchissante et une lentille. Le module est caractérisé en ce que la lentille s'étend parallèlement à une courbe de contrôle, la lentille ayant une section transversale à ladite courbe qui est essentiellement constante. La lentille présente ainsi une forme généralement torique. La surface réfléchissante est calculée suivant le chemin inverse de la lumière et sur base d'une constance du chemin de la lumière conformément au principe de Fermât. Plus particulièrement, le module décrit dans cet enseignement est un module bi-fonction avec une première fonction d'éclairage à coupure horizontale, telle qu'une fonction d'éclairage antibrouillard ou une fonction de feu de croisement dite « code ». La répartition horizontale de cette première fonction est contrôlée par la courbe de contrôle plane utilisée lors du calcul de la surface réfléchissante correspondante. Le module bi-fonction comprend également une deuxième fonction d'éclairage destinée à venir compléter la première afin d'assurer une fonction d'éclairage du type « route ». La surface réfléchissante correspondante est calculée en considérant que les rayons sortant de la lentille sont tous parallèles à une direction d'éclairage choisie. Les surfaces réfléchissantes des deux fonctions utilisent la même lentille. Cet enseignement ne prévoit cependant pas d'autre fonction de signalisation, notamment du type signalisation diurne DRL ou clignotant.

Le document de brevet EP 1 610 057 A1 divulgue un module d'éclairage produisant un faisceau d'éclairage à coupure, de type feu de croisement ou feu antibrouillard. Ce module comporte essentiellement une source lumineuse, réflecteur associé à une plaque plane générant la coupure et une lentille de type torique. Le réflecteur est déterminé pour transformer une surface d'onde sphérique provenant de la source en une surface d'onde se ramenant à un arc de cercle situé dans le plan de la plaque, et en ce que la lentille est de révolution autour d'un axe substantiellement orthogonal au plan de la plaque et passant par le centre dudit arc de cercle. De plus, le réflecteur est tel que des rayons lumineux issus de la source et tombant en des points situés sur une courbe formée par l'intersection de la surface du réflecteur et d'un plan vertical passant par le centre de l'arc de cercle, mais écarté de la source, sont réfléchis par la surface du réflecteur dans ce plan vertical de manière à converger en un point formé par l'intersection dudit plan vertical et de l'arc de cercle. Les rayons issus du module sont parallèles dans des plans verticaux et ne convergent pas sur l'arc de cercle. Ce document montre les caractéristiques du préambule de la revendication 1.

L'invention a pour objectif de proposer un module d'éclairage et/ou de signalisation palliant au moins un des inconvénients sus mentionnés. Plus particulièrement, l'invention a pour objectif de proposer un module d'éclairage comprenant une lentille de style telle qu'une lentille de forme généralement torique et .apte à assurer une fonction de signalisation diurne ou une fonction clignotant et apte à être intégrée de préférence avec une fonction d'éclairage sans coupure, de type feu de route. L'invention a pour objet un module d'éclairage et/ou de signalisation, notamment pour véhicule automobile, comprenant: une source lumineuse; un réflecteur avec une surface réfléchissante configurée pour réfléchir les rayons lumineux émis par la source lumineuse; une lentille s'étendant parallèlement à une courbe plane de contrôle G, avec une section au moins essentiellement constante dans toute coupe par un plan perpendiculaire à G et correspondant à celle d'une lentille de référence stigmatique entre un point situé à l'arrière de la lentille sur la courbe de contrôle G et l'infini à l'avant de la lentille, la lentille étant configurée de manière à transmettre les rayons lumineux réfléchis par le réflecteur de manière à former un faisceau lumineux d'éclairage et/ou de signalisation; remarquable en ce que la surface réfléchissante du réflecteur est configurée de manière à ce que les rayons du faisceau lumineux issus du module, dans le cas où la source lumineuse placée au foyer du système est ponctuelle, soient perpendiculaires à un arc de cercle A situé dans un plan parallèle à celui de la courbe de contrôle G, et à ce que lesdits rayons ou leurs prolongations rencontrent ledit arc de cercle.

Le module selon l'invention ne comprend pas de moyens de coupure du faisceau lumineux, sa finalité étant de générer des types de faisceaux de signalisation ou d'éclairage sans coupures, en particulier un faisceau de signalisation diurne, un faisceau d'indicateur de direction ou encore un faisceau d'éclairage de type route.

Le module selon l'invention permet avantageusement de proposer des projecteurs comportant des associations de deux modules, ou plus, ces modules ayant une esthétique proche et comportant une lentille torique. Parmi les associations possibles, on retient notamment une association d'un premier module assurant une fonction de feu de croisement, par exemple réalisé selon l'enseignement du document de brevet EP 1610057 ou EP 2565533, avec un second module combinant les fonction d'éclairage type route et fonction de signalisation diurne ou de clignotant réalisé selon la présente invention ou encore, une association avec un premier module d'éclairage bi-fonction code/route, par exemple réalisé selon l'enseignement du document FR 2960497, avec un second module de signalisation bi-fonction, DRL/clignotant réalisé selon la présente invention.

Selon un mode avantageux de l'invention, le chemin optique inverse des rayons depuis l'arc de cercle A jusqu'à la source lumineuse est constant selon le principe de Fermat de retour inverse de la lumière et de stationnarité du chemin optique suivi par la lumière le long d'un trajet.

Selon un autre mode avantageux de l'invention, l'arc de cercle A est situé par rapport à la lentille du même côté que la courbe de contrôle G, la projection des rayons sortant de la lentille rencontrant la courbe A dans des plans perpendiculaires à ladite courbe, de manière à former un faisceau divergeant.

Selon un encore autre mode avantageux de l'invention, l'arc de cercle A est situé par rapport à la lentille du côté opposé à celui de la courbe de contrôle G, les rayons sortant de la lentille rencontrant la courbe A de manière convergente dans des plans perpendiculaires à ladite courbe.

Selon un encore autre mode avantageux de l'invention, la lentille de référence est du type plan-convexe, la lentille du module présentant une face de sortie convexe.

Selon un encore autre mode avantageux de l'invention, la lentille comprend une face de sortie s'étendant suivant une courbe plane C parallèle à la courbe de contrôle G.

Selon un encore autre mode avantageux de l'invention, la source lumineuse est une première source lumineuse et la surface réfléchissante est une première surface réfléchissante, le module comprenant une deuxième source lumineuse et une deuxième surface réfléchissante configurée pour réfléchir les rayons lumineux émis par la deuxième source lumineuse, disposées latéralement à la première source lumineuse et à la première surface réfléchissante par rapport à la direction principale d'éclairage, la lentille s'étendant devant et coopérant avec la deuxième source lumineuse et la deuxième surface réfléchissante.

Selon un encore autre mode avantageux de l'invention, la deuxième surface réfléchissante est configurée de manière à ce que les rayons du faisceau d'éclairage ou de signalisation provenant de ladite deuxième surface réfléchissante soient parallèles à une direction donnée correspondant à une direction principale d'éclairage du module.

Selon un encore autre mode avantageux de l'invention, la lentille comprend une première partie coopérant au moins majoritairement avec les rayons provenant de la première source lumineuse et réfléchis par la première surface réfléchissante, la courbe de contrôle G de la première partie étant une première courbe de contrôle, et une deuxième partie coopérant au moins majoritairement avec les rayons provenant de la deuxième source lumineuse et réfléchis par la deuxième surface réfléchissante, la deuxième partie s'étendant suivant une deuxième courbe plane de contrôle g, la deuxième courbe de contrôle g ayant au moins un point en commun avec la première courbe de contrôle G, les tangentes aux première et deuxième courbes de contrôle G et g étant confondues audit point.

Selon un encore autre mode avantageux de l'invention, les première et deuxième courbes de contrôle G et g ont un tronçon en commun correspondant à une troisième partie de la lentille, ladite troisième partie étant commune aux première et deuxième surfaces réfléchissantes et sources lumineuses.

Selon un encore autre mode avantageux de l'invention, la première source lumineuse et la première surface réfléchissante assurent une première fonction de signalisation, préférentiellement une fonction de feu de signalisation diurne, la deuxième source lumineuse et la deuxième surface réfléchissante assurent une deuxième fonction d'éclairage ou de signalisation, préférentiellement une fonction d'éclairage du type route.

Selon un encore autre mode avantageux de l'invention, la source lumineuse est une LED.

Selon un encore autre mode avantageux de l'invention, la surface réfléchissante du réflecteur est configurée de manière à ce qu'elle admette un point unique e pour lequel les rayons lumineux partant de ce point et réfléchis par le réflecteur, puis réfractés par la lentille, sortent de la lentille de tel sorte qu'ils soient perpendiculaires à l'arc de cercle A, et à ce que ces rayons ou leurs prolongations rencontrent l'arc de cercle A, le faisceau d'éclairage et/ou de signalisation du module comprenant ces rayons. Le réflecteur et la source lumineuse sont agencés de manière à ce que ce point unique soit sur la source lumineuse.

Selon un encore autre mode avantageux de l'invention, ces rayons forment substantiellement ledit faisceau, lorsqu'ils sortent de la lentille.

Selon un encore autre mode avantageux de l'invention, la source lumineuse est positionnée sur le point unique e.

Selon un encore autre mode avantageux de l'invention, la source lumineuse est une LED comprenant un élément photoémissif semi-conducteur, la LED étant agencée de manière à ce que le point e soit sur cet élément photoémissif.

L'invention a également pour objet un projecteur pour véhicule automobile, comprenant un module d'éclairage et/ou de signalisation, remarquable en ce que le module est conforme à l'invention.

L'invention présente l'avantage de permettre une fonction de signalisation à faisceau convergeant ou divergeant derrière une lentille torique. Cela permet l'intégration de cette fonction dans un module comprenant déjà une autre fonction d'éclairage, notamment du type « route », utilisant une lentille torique. La lentille qui en résulte peut ainsi présenter un profil général homogène apte à s'intégrer dans des styles particuliers de véhicule.

D'autres caractéristiques et avantages de la présente invention seront mieux compris à l'aide de la description et des dessins parmi lesquels :

- La figure 1 illustre un module d'éclairage bi-fonction conforme à l'invention ;

- La figure 2 est une vue éclatée du module de la figure 1 ;

- La figure 3 est vue en perspective d'une partie de la lentille et d'un réflecteur assurant la fonction de signalisation diurne (DRL) du module de la figure 1 selon l'invention ;

- La figure 4 est une vue de dessus de la lentille et du réflecteur de la figure 3 ;

- La figure 5 est une vue en coupe selon l'axe 5-5 de la lentille de la figure 4 ;

- La figure 6 est une vue en perspective du front d'onde convergeant vers l'arc de cercle A ;

- La figure 7 est une vue en coupe de la lentille et de côté de l'arc de cercle A, illustrant l'influence de sa position verticale ;

- La figure 8 est une vue de dessus de la lentille et de l'arc de cercle A, illustrant l'influence de son éloignement de la lentille ;

- La figure 9 est une vue de dessus de la lentille et d'une variante de l'arc de cercle A ;

- La figure 10 est une vue en perspective de la lentille et d'une autre variante de l'arc de cercle A, ce dernier étant de l'autre côté de la lentille ;

- La figure 11 est une vue en perspective de la lentille, du réflecteur et de l'arc de cercle A, illustrant le calcul du chemin inverse de la lumière ;

- La figure 12 est une vue en perspective de la lentille complète et du réflecteur complet du module des figures 1 et 2 selon l'invention ;

- La figure 13 est vue de dessus de la courbe de contrôle G de la fonction de signalisation diurne (DRL) du module de l'invention, ainsi que de la courbe de contrôle g de la fonction d'éclairage du type route du même module ;

- La figure 14 est une alternative au profil des courbes de contrôle G et g de la figure 13.

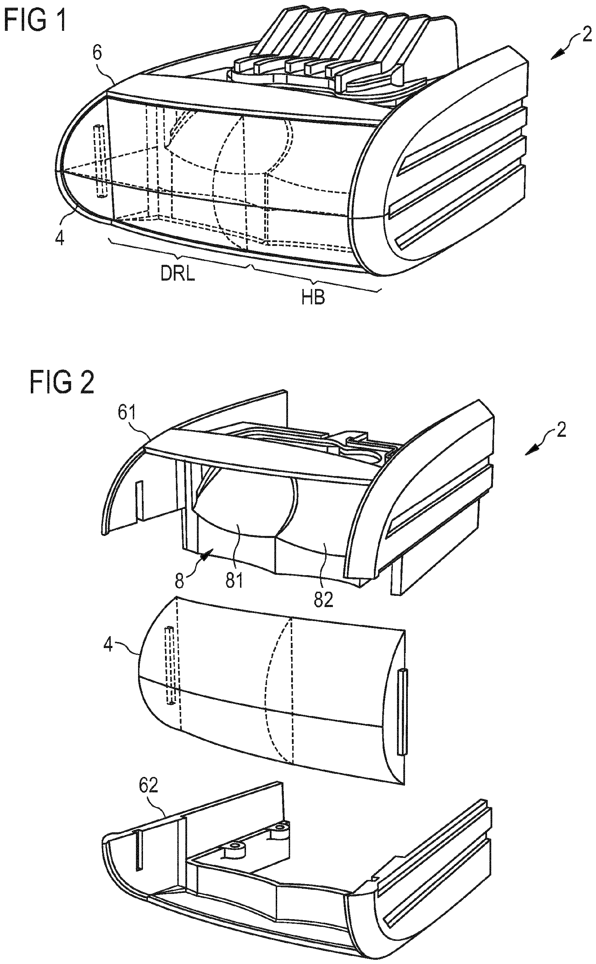

Les figures 1 et 2 illustrent un module d'éclairage et/ou signalisation bi-fonction pour véhicule automobile, conforme à l'invention. La figure 1 est une vue en perspective du module dans son état assemblé alors que la figure 2 illustre le même module sous forme éclatée. Le module d'éclairage 2 comprend, essentiellement, un boîtier 6, une lentille 4, un réflecteur 8 et des sources lumineuses (non visibles). Le boîtier 6 est constitué de deux parties 61 et 62. Le module assure deux fonctions d'éclairage, à savoir une première fonction du type signalisation diurne communément appelé DRL (acronyme de « Daytime Running Light »), et une deuxième fonction d'éclairage du type « route » communément désigné HB (acronyme de « High Beam »). Comme cela est visible aux figures, ces deux fonctions sont assurées par des éléments du module disposés côte-à-côte. Le réflecteur 8 comprend deux surfaces réfléchissantes disposées côte-à-côte et la lentille 6 est commune à ces deux surfaces. Elle présente une forme généralement torique.

L'utilisation de lentille torique est connue en soi pour une fonction d'éclairage du type « route », notamment de la demande de brevet publiée sous le numéro FR 2 960 497 A1 ou encore de la demande publiée sous le numéro EP 2 565522. Un des objectifs de l'invention décrite ici consiste à intégrer une fonction de signalisation telle qu'une fonction de signalisation diurne dans le module en utilisant une lentille apte à être la prolongation de la lentille de la fonction d'éclairage « route ».

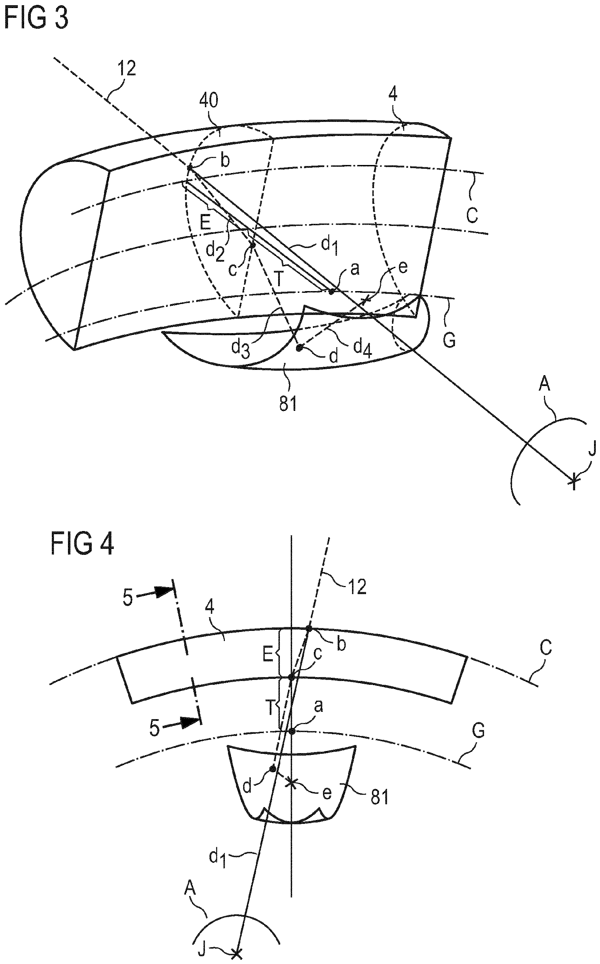

Les figures 3 et 4 sont des illustrations d'une partie de la lentille et d'un réflecteur assurant la fonction de signalisation diurne du module des figures 1 et 2. La figure 3 est une vue en perspective et la figure 4 est une vue de dessus. Plus particulièrement, ces figures illustrent le principe de fonctionnement optique du module et le principe de calcul de sa surface réfléchissante 81. Le module comprend, essentiellement, une lentille torique 4, une surface réfléchissante 81 et une source lumineuse ponctuelle ou du moins assimilable à une source ponctuelle, illustrée par le point *e*. Il est toutefois entendu que dans la pratique, la source lumineuse présentera une certaine surface d'éclairage, elle pourra prendre la forme d'une diode électroluminescente (LED) de puissance.

La lentille 4 est caractérisée en ce qu'elle est construite à partir d'une courbe plane de référence C qui correspond au contour extérieur du module. Une courbe de contrôle G est parallèle à la courbe C. Elle est par conséquent également plane. Il est à noter que la courbe de contrôle ne présente préférentiellement aucun point de rebroussement et aucun point multiple. Cette condition impose certaines contraintes à la courbe C que l'homme de métier pourra immédiatement identifier. La lentille 4 présente une section dans un plan perpendiculaire à la courbe de contrôle G qui est essentiellement constante et correspond à celle d'une lentille de référence plan-convexe stigmatique entre un point situé du côté de sa face plane et l'infini situé à l'opposé du côté de sa face arrondie. Le tirage de la lentille de référence est de valeur T et son épaisseur au centre est de valeur $E$. La courbe G est distante de la courbe C d'une valeur $E$+T et la lentille 4 est à une distance T de la courbe de contrôle G. La section de la lentille 4 correspondant à celle de la lentille de référence 4° définie ci-avant est visible en traits pointillés à la figure 3. La face avant de la lentille s'étend ainsi le long de la courbe C. Les valeurs $E$ et T sont également illustrées aux figures 3 et 4.

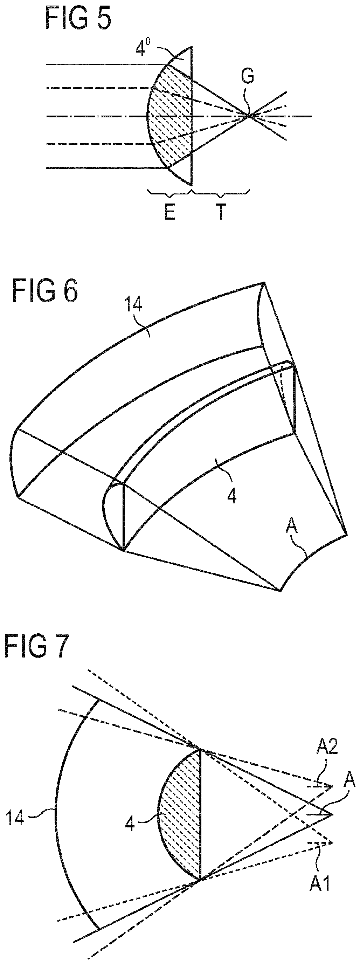

La figure 5 qui est vue en coupe selon l'axe 5-5 de la lentille 4 à la figure 4 illustre bien les caractéristiques de la lentille de référence 4°.

En relation avec les figures 3 et 4, la source lumineuse e et la surface réfléchissante 81 sont disposées du même côté de la lentille 4 que la courbe de contrôle G. Les rayons sortants de la lentille sont tels que leurs projections rencontrent un arc de cercle A centrée en J et situé dans un plan parallèle à celui des courbes C et G. Dans la configuration des figures 3 et 4, cet arc de cercle est disposé du même côté de la lentille 4 que la courbe de contrôle G. Les rayons sortant de la lentille et formant le faisceau d'éclairage du module forment ainsi un faisceau divergeant depuis l'arc de cercle A. L'influence de l'arc de cercle A sur la forme du faisceau d'éclairage sera détaillée plus loin en relation avec les figures 6 à 9.

La surface réfléchissante 81 est configurée de manière à ce que les rayons émis par la source lumineuse au point e et réfléchis par ladite surface sortent de la lentille suivant des directions perpendiculaires à l'arc de cercle A. Plus précisément, le prolongement vers l'arrière des rayons sortant sont dans des plans perpendiculaires à l'arc de cercle A et rencontrent l'arc de cercle A. La surface réfléchissante peut être calculée en considérant le trajet inverse de la lumière et par application du principe de Huygens et le principe de Fermat relatif au chemin optique. En effet, selon le principe de Huygens, la lumière se propage de proche en proche, l'ensemble des points d'égale perturbation lumineuse étant appelée surface d'onde. Chacun des points de cette surface atteint par la lumière se comporte comme une source secondaire qui émet des ondelettes sphériques dans un milieu isotrope. La surface enveloppe de ces ondelettes forme une nouvelle surface d'onde.

La lumière se propage plus difficilement ou plus lentement dans les milieux autres que le vide. L'indice n du milieu est défini par

$$n = c/v$$

où c et v sont la vitesse de la lumière dans le vide et dans le milieu, respectivement.

Le chemin optique est le chemin parcouru par la lumière dans le vide durant la durée de propagation dans le milieu :

$$L(AB) = \int_{t_A}^{t_B} c\,dt = \int_A^B n\,ds = c(t_B - t_A) = n \cdot AB$$

où s désigne l'abscisse curviligne le long du chemin parcouru dans le milieu entre les points A et B, et AB la longueur du chemin parcouru entre A et B. Le principe de Fermat s'énonce : entre deux points A et B, atteints par la lumière, le chemin optique suivi le long du trajet est stationnaire. Il résulte notamment

$$L(AB) = \int_A^B n\,ds = \int_B^A n(-ds) = \int_B^A n\,ds'$$

en considérant que ds'=-ds est l'élément de coordonnée curviligne de B vers A, on peut alors écrire que

$$L(AB) = L(BA)$$

C'est le principe de retour inverse de la lumière : le trajet suivi par la lumière pour aller d'un point à un autre ne dépend pas du sens de propagation de la lumière.

En référence à la figure 3, l'application du principe susmentionné au rayon sortant 12 nous donne :

$$nd_2 + d_3 + d_4 - d_1 = K$$

où

- $d_2$ est le trajet inverse dans la lentille 4 entre les points b et c ;
- $d_3$ est le trajet entre la lentille 4 au point c d'entrée du rayon et le point de réflexion d sur la surface réfléchissante 81 ;
- $d_4$ est le trajet entre le point de réflexion d sur la surface réfléchissante 81 et la source lumineuse ponctuelle e ;
- $d_1$ est le trajet virtuel du rayon depuis l'arc de cercle A jusqu'au point de sortie b de la lentille ; et
- $K$ est une constante.

Le trajet $d_1$ est précédé d'un signe négatif car il s'agit d'un trajet virtuel de sens opposé à celui des autres. L'application de l'équation sus mentionnée aux points formant la surface de sortie de la lentille permet de calculer la surface de la surface réfléchissante. La déviation des rayons par réflexion sur la surface réfléchissante et par réfraction lors de la traversée de la lentille peut être aisément calculée par application de la loi de Snell-Descartes.

La figure 6 illustre la forme torique du front d'onde 14 produit par des rayons sortant de la lentille 4, ces rayons étant perpendiculaires à l'arc de cercle A et leurs prolongements rencontrant ledit arc de cercle. En assimilant la source lumineuse réduite au point de convergence e, le principe de Fermat de chemin constant entre un tore et une sphère, réduits à l'arc de cercle A et au point e, peut ainsi être appliqué.

La figure 7 est une vue en coupe selon un plan longitudinal et vertical de la figure 6. On peut y identifier l'arc de cercle A, la lentille 4 et le front d'onde torique 14 correspondant. Des arcs de cercle alternatifs $A_1$ et $A_2$ à des hauteurs différentes sont représentés en traits pointillés. Ils illustrent bien l'impact de la position selon la verticale de l'arc de cercle, toutes autres choses étant égales, sur l'orientation verticale du faisceau : plus l'arc de cercle est haut, plus le faisceau est dirigé vers le bas et inversement.

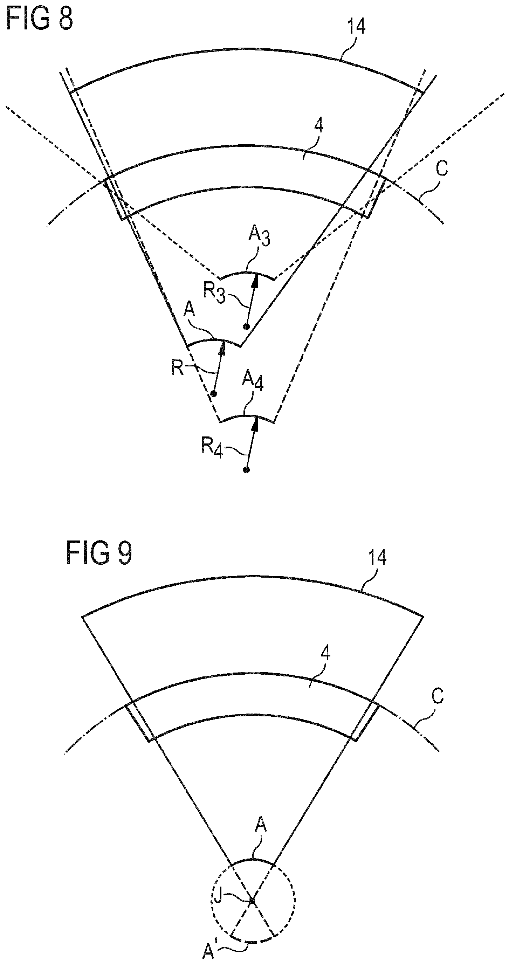

La figure 8 est une vue de dessus de la lentille et de l'arc de cercle A, illustrant l'influence de son éloignement par rapport à la lentille sur le faisceau d'éclairage. Un premier arc de cercle alternatif $A_3$ est illustré en trait continu il est plus proche de la lentille que l'arc de cercle A initial et présente un rayon $R_3$ inférieur au rayon R de l'arc de initial A. Le rayon $R_3$ est en effet inférieur compte tenu de la condition de perpendicularité des rayons du faisceau avec l'arc de cercle. Le faisceau d'éclairage correspondant, représenté en traits pointillés, est plus étalé horizontalement que le faisceau initial (en traits continus). Un deuxième arc de cercle alternatif $A_4$ plus éloigné de la lentille 4 que l'arc de cercle initial A est également illustré en trait continu.

Son rayon $R_4$ est supérieur au rayon R de l'arc de cercle de initial A. On peut également constater que le faisceau d'éclairage résultant est plus étroit horizontalement que celui résultant de l'arc de cercle initial A. On peut également constater que tout déplacement latéral de l'arc de cercle modifie l'orientation du faisceau, et ce dans un sens inverse au sens de déplacement de l'arc de cercle.

La figure 9 qui est une vue de dessus de l'arc de cercle A, de la lentille et de l'onde torique du faisceau illustre que l'arc de cercle ne doit pas nécessairement présenter sa convexité du côté de la lentille. En effet, un arc de cercle A' situé sur le cercle comprenant l'arc de cercle initial A et présentant sa concavité à la lentille est représenté. Les rayons du faisceau du module peuvent rencontrer l'arc de cercle A' et lui être perpendiculaire, similairement à l'arc de cercle initial A. Il est toutefois à noter que l'arc de cercle A', de par son plus grand éloignement de la lentille, produira un faisceau mois étalé verticalement, en référence aux figures 7 et 8.

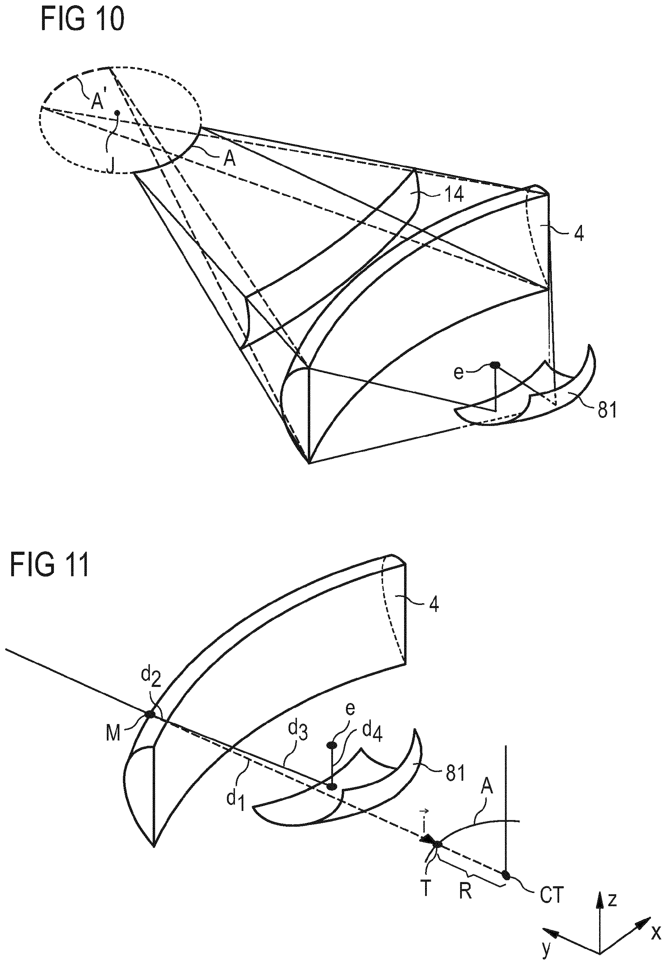

La figure 10 est une vue en perspective de la lentille et d'une autre variante de l'arc de cercle A, ce dernier étant de l'autre côté de la lentille. L'arc de cercle A est en effet du côté de la lentille qui correspond au faisceau d'éclairage. On peut constater que le front d'onde 14 est également torique, similairement à la configuration de la figure 6 et aux explications s'y rapportant, avec toutefois pour différence que la courbure du front d'onde est inversée. Lorsque l'arc de cercle A est disposé de ce côté de la lentille, le faisceau d'éclairage est alors convergeant.

La figure 11 est une vue en perspective de la lentille, du réflecteur et de l'arc de cercle A, illustrant le calcul du chemin inverse de la lumière. Pour ce faire, il est nécessaire de résoudre l'équation :

$$nd_2 + d_3 + d_4 - d_1 = K$$

décrite précédemment en relation avec les figures 3 et 4.

Dans un repère x y z tel que représenté à la figure 11, les coordonnées (itératives) du point $M$, les coordonnées du centre $C_T$ de l'arc de cercle A et son rayon R sont en principe connus. Les coordonnées du point $T$ peuvent s'exprimer comme suit :

$$T = \frac{R}{\sqrt{(M_x - C_{Tx})^2 + (M_y - C_{Ty})^2}} \begin{pmatrix} M_x - C_{Tx} \\ M_y - C_{Ty} \\ 0 \end{pmatrix} + \begin{pmatrix} C_{Tx} \\ C_{Ty} \\ C_{Tz} \end{pmatrix}$$

où $M_x$ et $M_y$ sont les coordonnées selon x et y du point $M$ ; et $C_{Tx}$, $C_{Ty}$ et $C_{Tz}$ sont les coordonnées selon x, y et z du point $C_T$.

La coordonnée $C_{Tz}$ correspond à un paramètre de réglage vertical dans le cadre d'une dissymétrie telle qu'illustrée à la figure 7.

Le trajet optique virtuel $d_1$, égal à $MT$ est alors connu.

Soit le vecteur normé $\vec{i}$ :

$$\vec{i} = -\varepsilon \frac{\overrightarrow{MT}}{\left\| \overrightarrow{MT} \right\|}$$

où $\varepsilon = \sigma(T_y - M_y)$ dans la mesure où l'axe optique correspond à l'axe y : $\vec{i}$ est connu. La fonction $\sigma$ est la fonction signe, c'est-à-dire que $\sigma(x)=1$ si x>0 et $\sigma(x)=-1$ si x<0.

Le calcul du trajet $d_2$, du point d'émergence I sur la face interne de la lentille du rayon en retour inverse et de sa direction $\vec{j}$ en I peut se faire ensuite par application des lois de Snell-Descartes, puisque le rayon incident en M en retour inverse de la lumière est de direction $\vec{i}$.

Alors, si on nomme P le point de rencontre du rayon avec le réflecteur,

$$\overrightarrow{IP} = d_3 \vec{j} \text{ et } d_4 = Pe = \left\| \overrightarrow{Ie} - \overrightarrow{IP} \right\| = \left\| Ie - d_3 \vec{j} \right\|$$

L'équation $nd_2 + d_3 + d_4 - d_1 = K$ est alors une équation d'inconnue unique $d_3$, $d_2$, $d_1$, $\vec{j}$ et I étant connus (voir ci-dessus) ainsi que K et e (qui sont des paramètres de conception).

Le résolution numérique de l'équation en $d_3$ détermine P (puisque $\overrightarrow{IP} = d_3\vec{j}$) et l'ensemble des points P déterminés itérativement définit la surface du réflecteur.

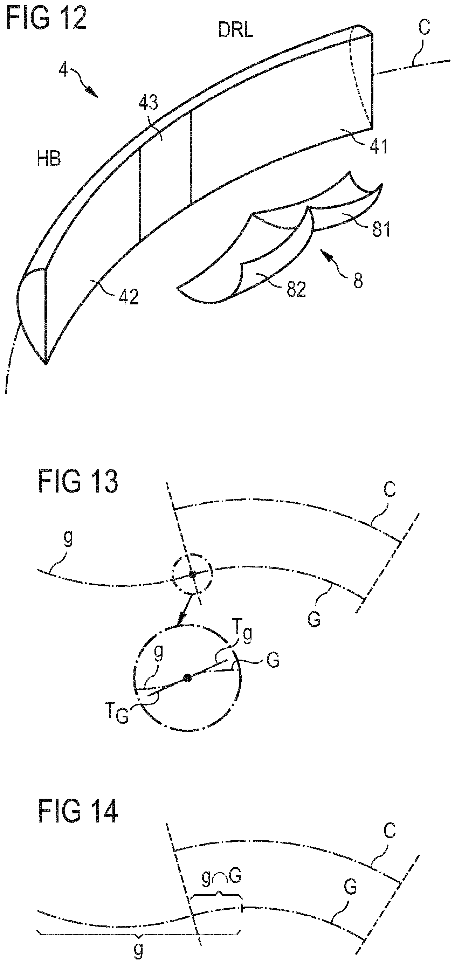

La figure 12 est une vue en perspective de la lentille complète 4 et du réflecteur complet 8 du module 2 des figures 1 et 2 selon l'invention. On peut observer que la lentille comprend trois parties : une première partie 41 correspondant à la première surface réfléchissante 81, une deuxième partie 42 correspond à la deuxième surface réfléchissante 82, et une troisième partie 43 entre les première et deuxième parties. La troisième partie peut se limiter à une zone de transition entre les deux autres, potentiellement très étroite ou encore de largeur assimilable à zéro, ou encore former une zone commune aux deux surfaces réfléchissantes 81 et 82.

La figure 13 illustre de manière schématique une première variante de la liaison entre la courbe de contrôle G de la fonction s de signalisation diurne et la courbe de contrôle g de l'autre fonction telle qu'une fonction d'éclairage du type « route ». On peut observer que les courbes ont un seul point en commun, les tangentes $T_G$ et $T_g$ de chacune des deux courbes de contrôle G et g en ce point étant confondues.

La figure 14 illustre une autre variante de la jonction entre les courbes de contrôle G et g. Elles présentent un tronçon commun $g \cap G$ qui correspond à la partie intermédiaire 43 de la figure 12.

L'invention a été décrite en relation avec une fonction de signalisation diurne (DRL). Il est toutefois à noter qu'elle s'applique pareillement à d'autres fonctions requérant un éclairage diffus telles que par exemple des fonctions de signalisation du type clignotant. La description qui vient d'être faite s'applique par conséquent également à une telle fonction qui peut alors être intégrée dans un module comprenant également une autre fonction telle qu'une fonction d'éclairage notamment du type « route ».

## Revendications

1. Module d'éclairage et/ou de signalisation (2), notamment pour véhicule, comprenant :

   - une source lumineuse (e) ;
   - un réflecteur (8) avec une surface réfléchissante (81) configurée pour réfléchir les rayons lumineux émis par la source lumineuse (e) ;
   - une lentille (4) s'étendant parallèlement à une courbe plane de contrôle G, avec une section au moins essentiellement constante et correspondant à celle d'une lentille de référence (4°) stigmatique entre un point situé à l'arrière de la lentille sur la courbe plane de contrôle G et l'infini à l'avant de la lentille, la lentille (4) étant configurée de manière à transmettre les rayons lumineux réfléchis par le réflecteur de manière à former un faisceau d'éclairage et/ou de signalisation ;

   **caractérisé en ce que**
   la surface réfléchissante (81) du réflecteur (8) est configurée de manière à ce que les rayons du faisceau d'éclairage et/ou de signalisation issus de la lentille du module soient perpendiculaires à un arc de cercle A situé dans un plan parallèle à celui de la courbe plane de contrôle G, et à ce que lesdits rayons ou leurs prolongations rencontrent l'arc de cercle A.

2. Module selon la revendication 1, **caractérisé en ce que** le chemin optique inverse des rayons depuis l'arc de cercle A jusqu'à la source lumineuse est constant selon le principe de Fermat de retour inverse de la lumière et de stationnarité du chemin optique suivi par la lumière le long d'un trajet.

3. Module selon l'une des revendications 1 et 2, **caractérisé en ce que** l'arc de cercle A est situé par rapport à la lentille (4) du même côté que la courbe plane de contrôle G, la projection des rayons sortant de la lentille (4) rencontrant la courbe A dans des plans perpendiculaires à ladite courbe, de manière à former une faisceau divergeant.

4. Module selon l'une des revendications 1 et 2, **caractérisé en ce que** l'arc de cercle A est situé par rapport à la lentille (4) du côté opposé à celui de la courbe plane de contrôle G, les rayons sortant de la lentille rencontrant la courbe A de manière convergente dans des plans perpendiculaires à ladite courbe.

5. Module selon l'une des revendications 1 à 4, **caractérisé en ce que** la lentille de référence (4°) est du type planconvexe, la lentille (4) du module (2) présentant une face de sortie convexe.

6. Module selon l'une des revendications 1 à 5, **caractérisé en ce que** la lentille (4) comprend une face de sortie s'étendant suivant une courbe plane C parallèle à la courbe plane de contrôle G.

7. Module selon l'une des revendications 1 à 6, **caractérisé en ce que** la source lumineuse est une première source lumineuse et la surface réfléchissante est une première surface réfléchissante (81), le module (2) comprenant une deuxième source lumineuse et une deuxième surface réfléchissante (82) configurée pour réfléchir les rayons lumineux émis par la deuxième source lumineuse, disposées latéralement à la première source lumineuse et à la première surface réfléchissante par rapport à la direction principale d'éclairage, la lentille (4) s'étendant devant et coopérant avec la deuxième source lumineuse et la deuxième surface réfléchissante (82).

8. Module selon la revendication 7, **caractérisé en ce que** la deuxième surface réfléchissante (82) est configurée de manière à ce que les rayons du faisceau d'éclairage et/ou de signalisation provenant de ladite surface soient parallèles à une direction donnée correspondant à une direction principale d'éclairement du module.

9. Module selon l'une des revendications 7 et 8, **caractérisé en ce que** la lentille (4) comprend une première partie (41) coopérant au moins majoritairement avec les rayons provenant de la première source lumineuse et réfléchis par la première surface réfléchissante (81), la courbe plane de contrôle G de la première partie étant une première courbe de contrôle, et une deuxième partie (42) coopérant au moins majoritairement avec les rayons provenant de la deuxième source lumineuse et réfléchis par la deuxième surface réfléchissante (82), la deuxième partie (42) s'étendant suivant une deuxième courbe plane de contrôle g, la deuxième courbe plane de contrôle g ayant au moins un point en commun avec la première courbe plane de contrôle G, les tangentes aux première et deuxième courbes de contrôle G et g étant confondues audit point.

10. Module selon la revendication 9, **caractérisé en ce que** les première et deuxième courbes plane de contrôle G et g ont un tronçon en commun correspondant à une troisième partie (43) de la lentille (4), ladite troisième partie étant commune aux première et deuxième surfaces réfléchissantes (81, 82) et sources lumineuses.

11. Module selon l'une des revendications 7 à 10, **caractérisé en ce que** la première source lumineuse et la première surface réfléchissante (81) assurent une première fonction de signalisation, préférentiellement une fonction de feu de signalisation diurne ou une fonction de clignotant, la deuxième source lumineuse et la deuxième surface réfléchissante (82) assurent une deuxième fonction d'éclairage ou de signalisation, préférentiellement une fonction d'éclairage du type route.

12. Module selon l'une des revendications 1 à 11, **caractérisé en ce que** la source lumineuse est une LED.

13. Module selon l'une des revendications 1 à 12, **caractérisé en ce que** la surface réfléchissante (81) du réflecteur (8) est configurée de manière à ce qu'elle admette un point unique (e) pour lequel les rayons lumineux partant de ce point et réfléchis par le réflecteur, puis réfractés par la lentille, sortent de la lentille de tel sorte qu'ils soient perpendiculaires à l'arc de cercle A, et à ce que ces rayons ou leurs prolongations rencontrent l'arc de cercle A, le faisceau d'éclairage ou de signalisation du module comprenant ces rayons.

14. Module selon la revendication 13, **caractérisé en ce que** ces rayons forment substantiellement ledit faisceau, lorsqu'ils sortent de la lentille.

15. Module selon la revendication 13 ou 14, **caractérisé en ce que** la source lumineuse est positionnée sur le point unique (e).

16. Module selon la revendication 15, **caractérisé en ce que** la source lumineuse est une LED comprenant un élément photoémissif semi-conducteur, la LED étant agencée de manière à ce que le point (e) soit sur cet élément photoémissif.

17. Projecteur pour véhicule automobile, comprenant un module d'éclairage et/ou de signalisation, **caractérisé en ce que** ledit module (2) est conforme à l'une des revendications 1 à 16.

**Patentansprüche**

1. Beleuchtungs- und/oder Signalisierungsmodul (2), insbesondere für ein Fahrzeug, welches umfasst:

- eine Lichtquelle (e);
- einen Reflektor (8) mit einer reflektierenden Fläche (81), die dafür ausgelegt ist, die von der Lichtquelle (e) ausgesendeten Lichtstrahlen zu reflektieren;
- eine Linse (4), die sich parallel zu einer ebenen Steuerkurve G erstreckt, mit einem Querschnitt, der wenigstens im Wesentlichen konstant ist und demjenigen einer stigmatischen Referenzlinse (4°) zwischen einem an der Rückseite der Linse auf der ebenen Steuerkurve G befindlichen Punkt und dem unendlich fernen Punkt vor der Linse entspricht, wobei die Linse (4) derart ausgebildet ist, dass sie die von dem Reflektor reflektierten Lichtstrahlen so durchlässt, dass ein Beleuchtungs- und/oder Signalisierungs-Lichtbündel gebildet wird;

**dadurch gekennzeichnet, dass**
die reflektierende Fläche (81) des Reflektors (8) derart ausgebildet ist, dass die Strahlen des Beleuchtungs- und/oder Signalisierungs-Lichtbündels, die von der Linse des Moduls ausgehen, senkrecht zu einem Kreisbogen A sind, der sich in einer Ebene befindet, die zu derjenigen der ebenen Steuerkurve G parallel ist, und dadurch, dass diese Strahlen oder ihre Verlängerungen auf den Kreisbogen A treffen.

2. Modul nach Anspruch 1, **dadurch gekennzeichnet, dass** der umgekehrte Lichtweg der Strahlen vom Kreisbogen A zur Lichtquelle konstant ist, gemäß dem Fermatschen Prinzip der Umkehrbarkeit des Strahlenganges und der Stationarität des Lichtweges, dem das Licht entlang einer Strecke folgt.

3. Modul nach einem der Ansprüche 1 und 2, **dadurch gekennzeichnet, dass** sich der Kreisbogen A, bezogen auf die Linse (4), auf derselben Seite wie die ebene Steuerkurve G befindet, wobei die Projektion der aus der Linse (4) austretenden Strahlen auf die Kurve A in Ebenen trifft, die zu der Kurve senkrecht sind, so dass ein divergierendes Lichtbündel gebildet wird.

4. Modul nach einem der Ansprüche 1 und 2, **dadurch gekennzeichnet, dass** sich der Kreisbogen A, bezogen auf die Linse (4), auf der Seite befindet, die derjenigen der ebenen Steuerkurve G gegenüberliegt, wobei die aus der Linse austretenden Strahlen auf die Kurve A auf konvergente Weise in Ebenen treffen, die zu der Kurve senkrecht sind.

5. Modul nach einem der Ansprüche 1 bis 4, **dadurch gekennzeichnet, dass** die Referenzlinse (4°) vom plankonvexen Typ ist, wobei die Linse (4) des Moduls (2) eine konvexe Austrittsfläche aufweist.

6. Modul nach einem der Ansprüche 1 bis 5, **dadurch gekennzeichnet, dass** die Linse (4) eine Austrittsfläche aufweist, die sich entlang einer ebenen Kurve C erstreckt, die zu der ebenen Steuerkurve G parallel ist.

7. Modul nach einem der Ansprüche 1 bis 6, **dadurch gekennzeichnet, dass** die Lichtquelle eine erste Lichtquelle ist und die reflektierende Fläche eine erste reflektierende Fläche (81) ist, wobei das Modul (2) eine zweite Lichtquelle und eine zweite reflektierende Fläche (82), die dafür ausgelegt ist, die von der zweiten Lichtquelle ausgesendeten Lichtstrahlen zu reflektieren, umfasst, die, bezogen auf die Hauptleuchtrichtung, seitlich von der ersten Lichtquelle und von der ersten reflektierenden Fläche angeordnet sind, wobei sich die Linse (4) vor der zweiten Lichtquelle und der zweiten reflektierenden Fläche (82) erstreckt und mit diesen zusammenwirkt.

8. Modul nach Anspruch 7, **dadurch gekennzeichnet, dass** die zweite reflektierende Fläche (82) derart ausgebildet ist, dass die von dieser Fläche kommenden Strahlen des Beleuchtungs- und/oder Signalisierungs-Lichtbündels parallel zu einer gegebenen Richtung sind, die einer Hauptleuchtrichtung des Moduls entspricht.

9. Modul nach einem der Ansprüche 7 und 8, **dadurch gekennzeichnet, dass** die Linse (4) einen ersten Teil (41), der wenigstens überwiegend mit den von der ersten Lichtquelle kommenden und von der ersten reflektierenden Fläche (81) reflektierten Strahlen zusammenwirkt, wobei die ebene Steuerkurve G des ersten Teils eine erste Steuerkurve ist, und einen zweiten Teil (42), der wenigstens überwiegend mit den von der zweiten Lichtquelle kommenden und von der zweiten reflektierenden Fläche (82) reflektierten Strahlen zusammenwirkt, umfasst, wobei sich der zweite Teil (42) entlang einer zweiten ebenen Steuerkurve g erstreckt, wobei die zweite ebene Steuerkurve g wenigstens einen Punkt mit der ersten ebenen Steuerkurve G gemeinsam hat, wobei die Tangenten an die erste und die zweite Steuerkurve G und g in diesem Punkt zusammenfallen.

10. Modul nach Anspruch 9, **dadurch gekennzeichnet, dass** die erste und die zweite ebene Steuerkurve G und g ein gemeinsames Teilstück aufweisen, das einem dritten Teil (43) der Linse (4) entspricht, wobei der dritte Teil der ersten und zweiten reflektierenden Fläche (81, 82) und der ersten und zweiten Lichtquelle gemeinsam ist.

**11.** Modul nach einem der Ansprüche 7 bis 10, **dadurch gekennzeichnet, dass** die erste Lichtquelle und die erste reflektierende Fläche (81) eine erste Signalisierungsfunktion sicherstellen, vorzugsweise eine Tagfahrlichtfunktion oder eine Blinkfunktion, und die zweite Lichtquelle und die zweite reflektierende Fläche (82) eine zweite Beleuchtungs- oder Signalisierungsfunktion sicherstellen, vorzugsweise eine Beleuchtungsfunktion vom Typ des Fernlichts.

**12.** Modul nach einem der Ansprüche 1 bis 11, **dadurch gekennzeichnet, dass** die Lichtquelle eine LED ist.

**13.** Modul nach einem der Ansprüche 1 bis 12, **dadurch gekennzeichnet, dass** die reflektierende Fläche (81) des Reflektors (8) derart ausgebildet ist, dass für sie ein einziger Punkt (e) existiert, für welchen die Lichtstrahlen, die von diesem Punkt ausgehen und von dem Reflektor reflektiert werden und danach von der Linse gebrochen werden, derart aus der Linse austreten, dass sie senkrecht zum Kreisbogen A sind, und dadurch, dass diese Strahlen oder ihre Verlängerungen auf den Kreisbogen A treffen, wobei das Beleuchtungs- oder Signalisierungs-Lichtbündel des Moduls diese Strahlen umfasst.

**14.** Modul nach Anspruch 13, **dadurch gekennzeichnet, dass** diese Strahlen im Wesentlichen dieses Lichtbündel bilden, wenn sie aus der Linse austreten.

**15.** Modul nach Anspruch 13 oder 14, **dadurch gekennzeichnet, dass** die Lichtquelle in dem einzigen Punkt (e) positioniert ist.

**16.** Modul nach Anspruch 15, **dadurch gekennzeichnet, dass** die Lichtquelle eine LED ist, die ein halbleitendes lichtemittierendes Element umfasst, wobei die LED derart angeordnet ist, dass sich der Punkt (e) auf diesem lichtemittierenden Element befindet.

**17.** Scheinwerfer für ein Kraftfahrzeug, welcher ein Beleuchtungs- und/oder Signalisierungsmodul umfasst, **dadurch gekennzeichnet, dass** dieses Modul (2) einem der Ansprüche 1 bis 16 entspricht.

**Claims**

**1.** A lighting and/or signaling module (2), notably for a vehicle, comprising:

- a light source (e);
- a reflector (8) with a reflecting surface (81) configured for reflecting the light rays emitted by the light source (e);
- a lens (4) running parallel to a plane control curve G, with a cross-section at least essentially constant and corresponding to that of a stigmatic reference lens ($4^0$) between a point situated behind the lens on the plane control curve G and infinity in front of the lens, the lens (4) being configured so as to transmit the light rays reflected by the reflector so as to form a lighting and/or signaling beam;

**characterized in that**
the reflecting surface (81) of the reflector (8) is configured in such a manner that the rays of the lighting and/or signaling beam coming from the lens of the module are perpendicular to a circular arc A situated in a plane parallel to that of the plane control curve G, and such that said rays or their projections intercept the circular arc A.

**2.** The module as claimed in claim 1, **characterized in that** the reverse optical path of the rays from the circular arc A up to the light source is constant according to Fermat's principle of reversability of the light path and of invariance of the optical path followed by the light along a physical path.

**3.** The module as claimed in either of claims 1 and 2, **characterized in that** the circular arc A is situated with respect to the lens (4) of the same side as the plane control curve G, the projection of the rays exiting from the lens (4) encountering the curve A in planes perpendicular to said curve, so as to form a divergent beam.

**4.** The module as claimed in either of claims 1 and 2, **characterized in that** the circular arc A is situated with respect to the lens (4) on the opposite side to that of the plane control curve G, the rays exiting from the lens encountering the curve A in a convergent manner in planes perpendicular to said curve.

**5.** The module as claimed in one of claims 1 to 4, **characterized in that** the reference lens ($4^0$) is of the plano-convex type, the lens (4) of the module (2) exhibiting a convex exit face.

6. The module as claimed in one of claims 1 to 5, **characterized in that** the lens (4) comprises an exit face extending following a plane curve C parallel to the plane control curve G.

7. The module as claimed in one of claims 1 to 6, **characterized in that** the light source is a first light source and the reflecting surface is a first reflecting surface (81), the module (2) comprising a second light source and a second reflecting surface (82) configured for reflecting the light rays emitted by the second light source, disposed laterally to the first light source and to the first reflecting surface with respect to the main direction of illumination, the lens (4) extending in front of and cooperating with the second light source and the second reflecting surface (82).

8. The module as claimed in claim 7, **characterized in that** the second reflecting surface (82) is configured in such a manner that the rays of the illuminating beam and/or of signaling coming from said surface are parallel to a given direction corresponding to a main direction of illumination of the module.

9. The module as claimed in either of claims 7 and 8, **characterized in that** the lens (4) comprises a first part (41) cooperating at least for the majority with the rays coming from the first light source and reflected by the first reflecting surface (81), the plane control curve G of the first part being a first control curve, and a second part (42) cooperating at least for the majority with the rays coming from the second light source and reflected by the second reflecting surface (82), the second part (42) extending following a second plane control curve g, the second plane control curve g having at least one point in common with the first plane control curve G, the tangents to the first and second control curves G and g being coincident at said point.

10. The module as claimed in claim 9, **characterized in that** the first and second plane control curves G and g have a section in common corresponding to a third part (43) of the lens (4), said third part being common to the first and reflecting second surfaces (81, 82) and light sources.

11. The module as claimed in one of claims 7 to 10, **characterized in that** the first light source and the first reflecting surface (81) provide a first signaling function, preferably a daytime running light function or a direction indicator function, the second light source and the second reflecting surface (82) provide a second lighting or signaling function, preferably a lighting function of the high-beam type.

12. The module as claimed in one of claims 1 to 11, **characterized in that** the light source is a LED.

13. The module as claimed in one of claims 1 to 12, **characterized in that** the reflecting surface (81) of the reflector (8) is configured in such a manner that it admits a single point (e) for which the light rays leaving from this point and reflected by the reflector, then refracted by the lens, exit from the lens such that they are perpendicular to the circular arc A, and such that these rays or their projections intercept the circular arc A, the lighting or signaling beam of the module comprising these rays.

14. The module as claimed in claim 13, **characterized in that** these rays substantially form said beam, when they exit from the lens.

15. The module as claimed in claim 13 or 14, **characterized in that** the light source is positioned on the single point (e).

16. The module as claimed in claim 15, **characterized in that** the light source is a LED comprising a semiconductor photo-emissive element, the LED being arranged in such a manner that the point (e) is on this photo-emissive element.

17. Headlamp for automobile vehicle, comprising a lighting and/or signaling module, **characterized in that** said module (2) is according to one of claims 1 to 16.

FIG 1

FIG 2

FIG 3

FIG 4

## FIG 5

## FIG 6

## FIG 7

FIG 8

FIG 9

FIG 10

FIG 11

FIG 12

DRL

C

4

43

41

HB

81

42

82

8

FIG 13

C

g

Tg

G

g

G

TG

FIG 14

C

g∩G

G

g

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 244284 A
- EP 2143994 A1
- EP 2187115 A2
- FR 2960497 A1
- EP 1610057 A1
- EP 1610057 A
- EP 2565533 A
- FR 2960497
- EP 2565522 A